Europäisches Patentamt

European Patent Office

Office européen des brevets

(19)

(11) Publication number: **0 040 975**

**A1**

(12)

# EUROPEAN PATENT APPLICATION

(21) Application number: **81302293.6**

(22) Date of filing: **22.05.81**

(51) Int. Cl.³: **G 02 F 1/13**

(30) Priority: **22.05.80 JP 68609/80**
**22.05.80 JP 68610/80**
**27.05.80 JP 71049/80**

(43) Date of publication of application: **02.12.81**
**Bulletin 81/48**

(84) Designated Contracting States: **DE FR GB**

(71) Applicant: **Matsushita Electric Industrial Co., Ltd., 1006, Oaza Kadoma, Kadoma-shi Osaka-fu, 571 (JP)**

(72) Inventor: **Tatsumichi, Toshio, 7-34, Higashiando Ando-mura, Ikoma-gun Nara-ken (JP)**
Inventor: **Kawarada, Hiroshi, 3-35-11, Higashikori, Hirakata-shi Osaka-fu (JP)**

(74) Representative: **Crawford, Andrew Birkby, A.A. THORNTON & CO. Northumberland House 303-306 High Holborn, London WC1V 7LE (GB)**

(54) **Method of preparation of a substrate for a liquid crystal display device, a positive display type liquid crystal display device, and a method of constructing such a device.**

(57) A liquid crystal display device of the positive display type is constructed using substrates (1), each of which is specially prepared by applying a film of insulating material (3) on the surface contacting the liquid crystal material (5, 6), rubbing the film with a cloth in a predetermined direction, and thereafter treating the film with a silane surfactant (4). This construction, under conditions of no applied voltage, causes the molecules of the liquid crystal material to orient with their axes perpendicular to the surfaces of the substrate with a small angle of tilt in a fixed direction from the normal to the substrate surface.

- 1 -

## METHOD OF PREPARATION OF A SUBSTRATE FOR A LIQUID CRYSTAL DISPLAY DEVICE, A POSITIVE DISPLAY TYPE LIQUID CRYSTAL DISPLAY DEVICE, AND A METHOD OF CONSTRUCTING SUCH A DEVICE.

This invention relates to a liquid crystal display device of the positive display type and more particularly to a method of preparing a substrate for such a device to enable perpendicular alignment of the molecules of the liquid crystal material.

Generally, in a liquid crystal display device there are two molecular configurations for the major axes of the molecules forming the liquid crystal material. One is where the molecules major axes are parallel to the substrate surface, and the other is where the major axes are perpendicular to the substrate surface. Regarding the parallel alignment, it is well-known that when liquid crystal material is sandwiched between two substrates of glass coated with polyimide film, which are rubbed in a predetermined direction with cotton cloth or the like, the major axes of the liquid crystal molecules orient parallel to the predetermined direction. Such parallel alignment of liquid crystal molecules with no applied voltage is used mainly with twisted nematic (TN) type liquid crystal materials so that with the molecules oriented in this way, the device will transmit light therethrough. This, we will call a negative display.

On the other hand, perpendicular alignment with no applied voltage is used in a guest-host type liquid crystal display device using a mixture of nematic liquid crystal dielectric material with negative dielectric anisotropy and a dichroic dye or a mixture of nematic liquid crystal dielectric material with negative dielectric anisotropy to which a small amount of optical active material has been added, and a dichroic dye. Perpendicular alignment with no applied voltage is also used with a guest-host type (White-Taylor type) display device using a mixture of nematic liquid crystal dielectric material with positive dielectric anisotropy and a dichroic dye, thereby utilizing a cholesteric nematic phase transition effect; or an electrically controlled birefringence type liquid crystal display device using nematic liquid crystal dielectric material with positive or negative dielectric anisotropy. All these devices are so-called positive display devices.

For example, with a so-called positive display guest-host type liquid crystal display device, in which digits are displayed in coloured conditions and the background is in uncoloured condition, the device has a cell comprising two electrode substrates prepared uniformly for perpendicular alignment, the cell enclosing therein a mixture of nematic liquid crystal dielectric material with negative dielectric anisotropy and a dichroic dye, or a mixture of nematic liquid crystal dielectric material with negative dielectric anisotropy to which a small amount of optical active material has been added and a dichroic dye.

In this instance, the liquid crystal material and dye molecules in the cell, when no voltage is applied, are aligned perpendicularly with respect to the surfaces of the electrode substrate, but when voltage is applied the liquid crystal and dye molecules turn from the fixed perpendicular direction to be disposed parallel to the substrate surfaces. So as not to degrade display characteristics, such as a contrast and uniformity, the liquid crystal and dye molecules need to be normally tilted at a small angle in a fixed direction from perpendicular orientation.

A method for aligning the liquid crystal molecules in perpendicular orientation has been proposed in West Germany Patent (DE) No. P 2722900 which discloses that substrates are coated with an organic solution including a metal (Al or Cr) and silicon and then thermally-decomposed at a high temperature, thereby forming an alignment film comprising metallic oxide (like $Al_2O_3$) and silicon oxide; a lecithin coating method; or a method of preparing the substrates merely by using a silane surfactant. Such methods, however, align the liquid crystal molecules only in perpendicular orientation with respect to the substrate surfaces, but cannot give a small tilt angle (pretilt) from perpendicular orientation to the alignment of liquid crystal molecules, so that a defect is created which causes a non-uniform display when voltage is applied.

A method for perpendicular alignment with a small tilt angle has been proposed using a silane surfactant for preparing the substrates by application, with oblique deposition, of $MgF_2$ by vacuum evaporation, in combination with addition of a perpendicular alignment agent to the liquid crystal material, or deposition of $CaF_2$ or LiF by vacuum evaporation. Such a method, however, makes difficult control of the film forming conditions, such as a deposition angle or film thickness in the oblique evaporation, thereby causing reproductivity problems. Also, when adding the alignment agent to the liquid crystal material, the property of the liquid crystal material is deteriorated in long-time use.

This invention has been designed to eliminate such conventional defects. An object of the invention is to provide a method of preparation of a substrate for manufacturing a liquid crystal display device, which aligns liquid crystal and dye molecules at the interface with electrode substrates uniformly in perpendicular orientation with a small angle of tilt (pretilt) in a fixed direction from the normal to the substrate surface, thereby obtaining superior display characteristics.

The present invention is characterized in that the surface of an insulator film provided at the surface of each electrode substrate is rubbed in the fixed direction with a cloth and then the film surface is prepared using a solution of a silane surfactant. Consequently the liquid crystal and dye molecules can be aligned with a tilt at a small angle in the fixed direction from the normal with respect to the surface of the substrate.

Features and advantages of the invention will become more apparent from the following description given by way of example with reference to the accompanying drawings, in which:-

Figure 1 is a sectional side view of an embodiment of the invention; and

Figure 2 is a view explanatory of primary alignment condition of liquid crystal and dye molecules.

Firstly, a glass substrate with a transparent electrode film made of a compound, such as indium tin oxide, is fully cleaned and dried, and then the surface of the substrate is coated with an insulating film, such as $SiO_2$, $SiO$, $TiO_2$, $CeO_2$, $Al_2O_3$, $Y_2O_3$ or polyimide film. Thereafter, the film is rubbed in a predetermined direction using a cloth made from cotton or various synthetic fibres.

In this instance, the method of forming the insulating film, e.g., a silicon dioxide film, requires that the substrate is immersed in a solution including an organic silicon compound, such as $Si(OR)_4$ (R: the alkyl group) and then heated in the air at 300 to 550°C for 30 to 60 minutes, or that silicon dioxide is coated on the substrate by vacuum evaporation through electron beam heating, or that silicon dioxide is coated by sputtering. One of the above methods forms a silicon dioxide film of 500 to 5000Å in thickness. A thickness smaller than 500Å may cause uneven alignment of the molecules and a thickness over 5000Å is not preferable because of causing higher threshold voltage of the display.

A polyimide film is formed in such a manner that poly- amic acid produced by the action of aromatic diamine and aromatic dianhydride is dissolved by a solvent such as N-methyl-pyrrolidone, dimethyl-acetoamide and dimethyl-formamide, and diluted to be applied on the electrode substrate by rotary application, immersion, or spraying, and thereafter is heat-treated to cause polymerization, thereby forming an imide bond. In this instance, the heat treatment temperature is preferred to be 200 to 350°C. The thickness of the thus produced polyimide film is preferred to be 0.01 to 1μ having regard to the alignment effect, response speed, and threshold voltage of the liquid crystal.

Next, the surface of insulating film formed on the electrode substrate is rubbed with cloth in a predetermined direction, the cloth being of suitable material such as cotton, polyester, Tetron, nylon, or these fibres including an inorganic compound, such as titanium oxide.

Good results of rubbing are obtained in a range of rubbing pressure of 1 to 50 $gr/cm^2$, speed of 50 to 500 m/min, and repeating the rubbing 5 to 50 times.

The surface of the thus treated substrate as mentioned above is further treated with a silane surfactant solution diluted by an organic solvent, the silane surfactant preferably being octadecyl triethoxy silane or N,N-dimethyl-N-octadecyl-3-aminopropyl trimethoxy silyl chloride.

These silane surfactants are soluble in various solvents, but when octadecyl triethoxy silane is used as a surfactant, an alcohol, such as isopropyl alcohol, n-propyl alcohol, ethyl alcohol, or methyl alcohol, or an organic solvent, such as trichloroethane, are suitable for obtaining the uniform perpendicular alignment of the liquid crystal molecules.

When using N,N-dimethyl-N-octadecyl-3-aminopropyl trimethoxy chloride as the surfactant, water rather than the above solvents can be used and demonstrates a superior alignment effect.

The substrate is immersed in the above surfactant dissolved in the above solvents, and then dried at 100 to 170°C for 30 to 60 minutes, thereby forming an extremely thin silane surfactant film on the surface of the rubbed insulating film on the substrate. Alternatively the surfactant solution may be applied by rotational application or spraying.

The surfactant density in solution is preferably within a range of 0.01 to 5%. When it is 0.01% or less, the treatment effect is small, and when over 5%, uniform surface treatment is difficult to achieve which tends to cause uneven alignment of the liquid crystal molecules.

The surfactant film drying conditions are preferably in the atmosphere for 30 minutes at a temperature of 100 to 170°C. With a temperature of 100°C or less or 170°C or more good perpendicular alignment of liquid crystal and dye molecules is not obtainable.

A display cell is constructed from a pair of electrode substrates treated as above disposed opposite to each other at a given spacing with an epoxy resin applied at the outer periphery of each substrate. The substrates are then stuck to form the cell.

Thereafter, the liquid crystal material is introduced into the space between the electrodes. The type of liquid crystal material will depend on the type of display device required and will either be a mixture as described above or else a material which exhibits controlled birefringence.

For example, when producing a positive display guest-host type liquid crystal display device, a nematic liquid crystal material with negative dielectric anisotropy, or a mixture of the above nematic liquid crystal to which a small amount of an optical active material has been added to give a slightly spiral construction, is mixed with a dichroic dye, thereby completing the display device.

In the display device completed as above the liquid crystal and dye molecules are disposed uniformly at small tilt angles in a fixed direction with respect to the normal to the substrate. This is due to the insulating film on the substrate having been rubbed so that the molecules are aligned at a constant small tilt angle in the direction of rubbing with respect to the substrate surface. It is assumed that the film further treated with the surfactant allows the molecules to be kept in the perpendicular orientation with respect to the surface and the perpendicular orientation at the small tilt angle results in a condition of aligning the molecules in a fixed direction slightly tilted from the normal.

Thus, this invention comprises a combination of processes of providing an insulating film on an electrode substrate, rubbing it, and thereafter treating the surface with a silane surfactant solution, thereby to achieve a superior alignment effect.

For this purpose, the insulating film allows a uniform, stable and good alignment effect. If the rubbing process is omitted, liquid crystal and dye molecules are not disposed at a small tilt angle and in a fixed direction with respect to the normal of substrate, resulting in an uneven display during voltage application. When the rubbing is carried out after the silane surfactant treatment, uniform alignment is not obtainable. Furthermore, when no silane surfactant treatment is carried out, the liquid crystal and dye molecules are not in perpendicular alignment with respect to the substrate surface.

The effect of the invention will be described in accordance with an example of a positive display guest-host type display device using a mixture of a nematic liquid crystal material with negative dielectric anisotropy to which a small amount of optically active material has been added and dichroic dye.

This display device, under no applied voltage conditions, has the liquid crystal and dye molecules oriented substantially perpendicularly with respect to the substrate surface, thereby scarcely absorbing light, thus obtaining a bright colourless display.

On the other hand, when voltage is applied,

the liquid crystal and dye molecules are disposed parallel to each other and forming a uniform continuous spiral shape from one substrate surface to the other, thereby obtaining an even coloured display.

This is because, in the no-voltage condition, the liquid crystal and dye molecules are in perpendicular orientation with a small tilt angle in a fixed direction with respect to the normal of the substrate. Hence, when applying voltage, the liquid crystal and dye molecules change from the tilted condition to parallel orientation with a continuous spiral.

Perpendicular orientation without such tilting, when voltage is applied, does not result in the production of the continuous spiral and parallel orientation, which causes uneven display in the coloured condition. As seen from the above, the alignment treatment method demonstrates a superior effect as regards the display characteristics of a liquid display device to that produced by a device utilizing simply perpendicular alignment of the molecules under no-voltage conditions.

Next, an embodiment of the invention will be described in detail.

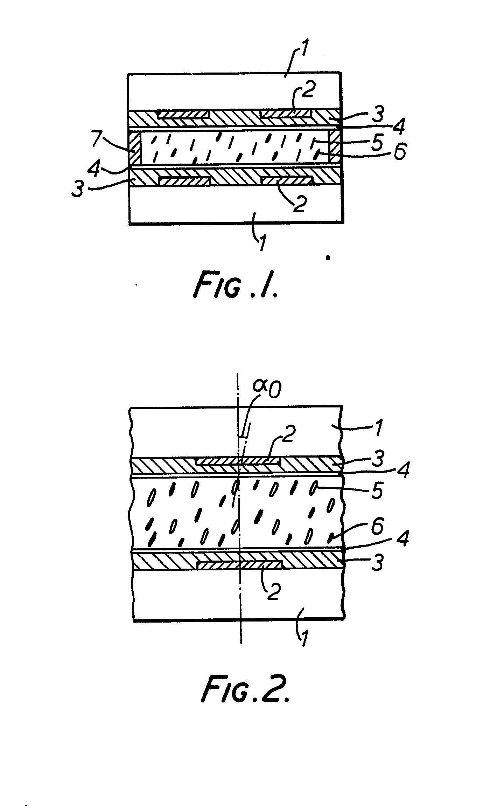

Figure 1 shows a first embodiment of the present invention, in which a glass substrate 1 provided with a transparent electrode 2 comprising an indium tin oxide film is fully cleaned and dried. Thereafter, the substrate 1 is provided with a silicon monoxide film 3 of 150Å in thickness, which is made of silicon monoxide coated by vacuum evaporation in a direction normal to the substrate. Next, the surface of film 3 is rubbed in a predetermined direction using a cloth mainly of Tetron under a pressure of 5 gr/cm$^2$, at a rubbing speed of 300 m/min. The surface is rubbed 10 times in the predetermined direction.

Thereafter, the substrate is immersed for three minutes in an aqueous solution of 0.1% N,N-dimethyl-N-octadecyl-3-aminopropyl trimethoxy silyl chloride and force-dried using nitrogen gas, and then dried at $100^{\circ}$C for one hour, thereby forming a thin film 4 of N,N-dimethyl-N-octadecyl-3-aminopropyl trimethoxy silyl chloride. Next, a pair of substrates 1 each having been treated as above are disposed opposite to and parallel to each other such that the directions of rubbing are reversed. The substrates are kept spaced apart at an interval of $10\mu$ and are bonded to each other using an epoxy resin adhesive 7 applied around the periphery of the substrates to form a cell.

A second embodiment forms a thin film 4 of silicon dioxide on a glass substrate 1 provided with a transparent electrode 2 by immersing the substrate in a solution mainly of organic silicon compound, and firing the substrate in the atmosphere at a temperature of $500^{\circ}$C for one hour, thereby forming a silicon dioxide film 3 of $1500$Å in thickness.

Next, the surface of the film 3 is rubbed in a similar manner to the first embodiment and immersed in a solution of 0.3% 1.1.1 trichloroethane of octadecyl triethoxy silane for two minutes and then dried in the atmosphere at $150^{\circ}$C for 30 minutes, thereby forming a thin film of octadecyl triethoxy silane. Thereafter, the substrates 1 are assembled into a cell in the same manner as before.

In a third embodiment, a polyimide film 3 is formed on a glass substrate 1 provided with a transparent electrode 2 by rotary-application with a N,N-dimethyl aceto-amide solution including 2.3% polymic acid and then heat-treated at $300^{\circ}$C for 30 minutes to cause polymerization, thereby forming a polyimide film 3 of 0.06μ in thickness. Next, the surface of film 3, similarly to the first embodiment, is rubbed and then immersed for 3 minutes in an isopropyl alcohol solution of 0.1% N,N-dimethyl-N-octadecyl-3-aminopropyl trimethoxy silyl chloride and force-dried using nitrogen gas and then dried in the atmosphere at $100^{\circ}$C for one hour, thereby forming a thin film of N,N-dimethyl-N-octadecyl-3-aminopropyl trimethoxy silyl chloride. Thereafter, the substrates 1 are assembled into a cell in the same manner as before.

Into the cells of the embodiments 1 to 3 produced as the above is enclosed a mixed material of: nematic liquid crystal material 5 (dicyano hydroquinone liquid crystal mixture) with negative dielectric anisotropy and a dichroic dye of 0.8 weight-percent added to the nematic liquid crystal; or a mixture of nematic liquid crystal material 5 with negative dielectric anisotropy to which has been added 3.2 weight-percent of an optical active material and 0.8 weight-percent of a dichroic dye.

A guest-host type liquid crystal display device with no added optical active material is combined with a linear polarizing plate so that its polarizing axis is parallel to the rubbing direction. The display device completed as the foregoing, when no voltage is applied, has the liquid crystal and dye molecules disposed uniformly in the fixed direction with an angle of tilt $\alpha_0$ of the order of $0^{\circ} < \alpha_0 \leq 5^{\circ}$ with respect to the normal to the substrate (see Figure 2).

The result is that those portions to which no voltage is applied are almost not coloured and are bright and those portions to which voltage is applied are deep coloured, thereby producing a coloured display which is bright, clear, has good contrast and a wide angle of view. The display device according to the second embodiment produces a display which is especially uniform, bright, clear, and of high quality.

As seen from the description of the embodiments of the positive display guest-host type display device using as a dielectric material a nematic liquid crystal material with negative dielectric anisotropy, optically active material, and dichroic dye, the method can easily and reliably complete the perpendicular alignment of liquid crystal molecules at small tilt angles in a fixed direction, which is not limited in application to the aforesaid guest-host type liquid crystal display device.

In other words, this invention is applicable in a case that in order to obtain other liquid crystal devices of another guest-host type (White Taylor type) or electrically controlled birefringence type using nematic liquid crystal materials exhibiting positive or negative dielectric anisotropy, such as Schiff base liquid crystal material, biphenyl liquid crystal material, azoxy liquid crystal material, phenyl cyclohexane liquid crystal material, or phenyl pyrimidine liquid crystal material, or a mixture of these liquid crystal materials, or these liquid crystal materials to which optically active material has been added.

CLAIMS:

1.      A method of constructing a liquid crystal
display device, comprising disposing two substrates
each provided with electrodes in fixed spaced apart
relationship, and introducing into the space between
said substrates a liquid crystal dielectric material
of a type such that the display device will, in use,
be a positive display device, characterised in that ·
each of the substrates is prepared by providing an
insulating film on the surface of said substrate in
contact with said dielectric material, that the film
is rubbed with a cloth in a predetermined direction,
and that thereafter said surface is treated with a
silane surfactant.

2.      A method according to claim 1, characterised
in that said insulating film is a film of an oxygen
containing compound.

3.      A method according to claim 2, characterised
in that said film is a silicon dioxide film.

4.      A method according to claim 1, characterised
in that said insulating film is a polyimide film.

5.      A method according to any one of the
preceding claims wherein said silane surfactant is
octadecyl triethoxy silane or N,N-dimethyl-N-
octadecyl-3-amino-propyl trimethoxy silyl chloride.

6.      A liquid crystal display device of the
positive display type comprising two spaced apart
substrates each provided with an electrode, and liquid
crystal dielectric material in the space between the substrates, said material being such that the device will, in use, be a positive display device, characterised in that each of the substrates is provided with an insulating film on the surface in contact with the dielectric material, which film has been rubbed in a predetermined direction and thereafter treated with a silane surfactant.

7.      A liquid crystal display device according to claim 6, characterised in that the film is of silicon dioxide or polyimide.

8.      A liquid crystal display device according to claim 6 or 7, characterised in that said silane surfactant is octadecyl triethoxy silane or N,N-dimethyl-N-octadecyl-3-aminopropyl trimethoxy silyl chloride.

9.      A method of preparing a substrate for use in a liquid crystal display device comprising providing one surface of the substrate with an electrode, applying a film of an insulating material to said surface, and rubbing the film with a cloth in a predetermined direction characterised in that, after rubbing, said film is treated with a silane surfactant.

FIG.1.

FIG.2.

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | G 02 F 1/13 |
| X | DE – A1 – 2 620 259 (HUGHES)<br>* Figs. 1-4; page 6, lines 16-24; page 7, lines 3-17; page 8, lines 1-4; page 10, lines 1-8 *<br>-- | 1-3, 6,7, 9 | |
| | DE – B2 – 2 638 091 (DAI NIPPON)<br>* Fig. 1; column 1, lines 37-64; column 8, lines 4-25, 41-44 *<br>& GB-A-1 543 768<br>-- | 1,4, 7 | |
| | | | TECHNICAL FIELDS SEARCHED (Int.Cl. 3) |
| X | US – A – 3 854 793 (KAHN)<br>* Column 5, lines 37-42 *<br>---- | 5,8, | G 02 F 1/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| X | The present search report has been drawn up for all claims | | |
|---|---|---|---|
| Place of search<br>VIENNA | Date of completion of the search<br>05-08-1981 | Examiner<br>BENISCHKA | |